# EUROPEAN PATENT APPLICATION

(11) **EP 4 819 160 A1**
(43) Date of publication of application: **07.10.2026**
(21) Application number: 24895602.1
(22) Date of filing: 25.06.2024
(51) Int. Cl.: G21C 17/108

(54) **FUEL ASSEMBLY LINEAR POWER DENSITY MEASUREMENT METHOD AND APPARATUS, COMPUTER DEVICE AND MEDIUM**

(30) Priority: 29.11.2023 CN 202311627027
(71) Applicant: China Nuclear Power Technology Research Institute Co., Ltd., Shenzhen, Guangdong 518031 (CN); CGN Power Co., Ltd., Shenzen, Guangdong 518028 (CN); China Nuclear Power Engineering Co., Ltd., Shenzhen, Guangdong 518124 (CN)
(72) Inventor: LI, Kejia, Shenzhen, Guangdong 518031 (CN); HU, Yisong, Shenzhen, Guangdong 518031 (CN); ZHANG, Wei, Shenzhen, Guangdong 518031 (CN); MAO, Yulong, Shenzhen, Guangdong 518031 (CN); WANG, Weiru, Shenzhen, Guangdong 518031 (CN); FENG, Yingjie, Shenzhen, Guangdong 518031 (CN); HU, Yousen, Shenzhen, Guangdong 518031 (CN); CAO, Jianhua, Shenzhen, Guangdong 518031 (CN); CHEN, Tianming, Shenzhen, Guangdong 518031 (CN); MENG, Shuqi, Shenzhen, Guangdong 518031 (CN); LU, Xianghui, Shenzhen, Guangdong 518031 (CN)
(74) Representative: Thomas, Tomos Daniel
(86) International application number: PCT/CN2024/101365
(87) International publication number: WO 2025/112499

(57) **Abstract**

A method and an apparatus for measuring a linear power density of a fuel assembly, a computer device, and a medium are provided. The method includes: when no in-core detection device is provided at a target height position of a target fuel assembly in a reactor core, whether in-core detection devices provided at the target height position of a preset number of candidate fuel assemblies that are in the reactor core and adjacent to the target fuel assembly are damaged is detected; when the in-core detection devices provided at the target height position of the candidate fuel assemblies are all damaged, measured linear power densities corresponding to positions, other than the target height position, in the target fuel assembly are obtained; and a target linear power density at the target height position of the target fuel assembly is determined based on the measured linear power densities.

## Description

This application claims priority to Chinese Patent Application No. CN202311627027.9, filed on November 29, 2023, and entitled "Method And Apparatus For Measuring Linear Power Density Of Fuel Assembly, Computer Device, And Medium", the entire content of which is incorporated herein by reference.

### TECHNICAL FIELD

The present application relates to the technical field of nuclear power, and in particular, to a method, an apparatus, a computer device, and a medium for measuring a linear power density of a fuel assembly.

### BACKGROUND

With the development of computer devices and detection technologies, the linear power density at each axial height in each fuel assembly can be collected by an in-core detection device (such as a self-powered neutron detector (SPND)), to complete three-dimensional power reconstruction of a reactor core.

In the related art, in-core detection devices are provided on some of the fuel assemblies. The linear power density of a fuel assembly is directly obtained by the in-core detection device. For a fuel assembly not provided with an in-core detection device, the linear power density of the fuel assembly can be obtained through weighted calculation based on linear power densities of a preset number of fuel assemblies that are provided with in-core detection devices and located therearound.

Although this manner can determine the linear power density of a fuel assembly not provided with an in-core detection device, when the in-core detection devices of a preset number of fuel assemblies that are provided with the in-core detection devices and located therearound are all damaged, the weighted calculation cannot be continued, and the linear power density of the fuel assembly not provided with the in-core detection device cannot be accurately obtained.

### SUMMARY

Accordingly, it is necessary to provide, in view of the above technical problem, a method, an apparatus, a computer device, and a medium for measuring a linear power density of a fuel assembly, which are capable of accurately obtaining a linear power density of a fuel rod not provided with a detection device.

In a first aspect, a method for measuring a linear power density of a fuel assembly is provided in the present application, the method including:
detecting, when no in-core detection device is provided at a target height position of a target fuel assembly in a reactor core, whether in-core detection devices provided at the target height position of a preset number of candidate fuel assemblies in the reactor core are damaged, the preset number of candidate fuel assemblies being adjacent to the target fuel assembly, and each of the candidate fuel assemblies being provided with the in-core detection device;
obtaining, when the in-core detection devices provided at the target height position of the candidate fuel assemblies are all damaged, measured linear power densities corresponding to positions other than the target height position of the target fuel assembly, the in-core detection devices provided at the other positions of the candidate fuel assemblies being not damaged; and
determining a target linear power density at the target height position of the target fuel assembly based on the measured linear power densities.

In an embodiment, determining the target linear power density at the target height position of the target fuel assembly based on the measured linear power densities includes:
performing polynomial interpolation on the measured linear power densities to determine an intermediate linear power density at the target height position of the target fuel assembly; and
determining the target linear power density based on a sign of the intermediate linear power density.

In an embodiment, determining the target linear power density based on the sign of the intermediate linear power density includes:
determining the target linear power density based on the target height position of the target fuel assembly when the intermediate linear power density is negative; and
taking the intermediate linear power density as the target linear power density when the intermediate linear power density is not negative.

In an embodiment, determining the target linear power density based on the target height position of the target fuel assembly includes:
taking, when the target height position is a head height position or a tail height position, the measured linear power density corresponding to a position adjacent to the target height position of the target fuel assembly as the target linear power density; and
performing, when the target height position is a middle height position, linear interpolation on the measured linear power densities corresponding to two positions adjacent to the target height position of the target fuel assembly to obtain the target linear power density.

In an embodiment, the method further includes:
obtaining, when at least one in-core detection device at the target height position of the candidate fuel assemblies is not damaged, measured linear power densities at the target height position of the candidate fuel assemblies; and
determining the target linear power density based on the measured linear power densities at the target height position of the candidate fuel assemblies, measurement weights corresponding to the candidate fuel assemblies, and signal states of the in-core detection devices provided at the target height position of the candidate fuel assemblies.

In an embodiment, the method further includes:
determining distances between the target fuel assembly and the candidate fuel assemblies, respectively; and
determining the measurement weights corresponding to the candidate fuel assemblies, respectively, based on preset weights corresponding to respective distance ranges to which the distances belong.

In a second aspect, an apparatus for measuring a linear power density of a fuel assembly is further provided in the present application, the apparatus including:
a damage detection module, configured to detect, when no in-core detection device is provided at a target height position of a target fuel assembly in a reactor core, whether in-core detection devices provided at the target height position of a preset number of candidate fuel assemblies in the reactor core are damaged, the preset number of candidate fuel assemblies being adjacent to the target fuel assembly;
a density obtainment module, configured to obtain, when the in-core detection devices provided at the target height position of the candidate fuel assemblies are all damaged, measured linear power densities corresponding to positions other than the target height position of the target fuel assembly, the in-core detection devices provided at the other positions of the candidate fuel assemblies being not damaged; and
a density determination module, configured to determine a target linear power density at the target height position of the target fuel assembly based on the measured linear power densities.

In a third aspect, a computer device is further provided in the present application, the computer device including a memory and a processor, the memory storing a computer program, and the processor implementing the following steps when executing the computer program:
detecting, when no in-core detection device is provided at a target height position of a target fuel assembly in a reactor core, whether in-core detection devices provided at the target height position of a preset number of candidate fuel assemblies in the reactor core are damaged, the preset number of candidate fuel assemblies being adjacent to the target fuel assembly;
obtaining, when the in-core detection devices provided at the target height position of the candidate fuel assemblies are all damaged, measured linear power densities corresponding to positions other than the target height position of the target fuel assembly, the in-core detection devices provided at the other positions of the candidate fuel assemblies being not damaged; and
determining a target linear power density at the target height position of the target fuel assembly based on the measured linear power densities.

In a fourth aspect, a computer-readable storage medium is further provided in the present application, having a computer program stored thereon, the computer program implementing the following steps when executed by a processor:
detecting, when no in-core detection device is provided at a target height position of a target fuel assembly in a reactor core, whether in-core detection devices provided at the target height position of a preset number of candidate fuel assemblies in the reactor core are damaged, the preset number of candidate fuel assemblies being adjacent to the target fuel assembly;
obtaining, when the in-core detection devices provided at the target height position of the candidate fuel assemblies are all damaged, measured linear power densities corresponding to positions other than the target height position of the target fuel assembly, the in-core detection devices provided at the other positions of the candidate fuel assemblies being not damaged; and
determining a target linear power density at the target height position of the target fuel assembly based on the measured linear power densities.

In a fifth aspect, a computer program product is further provided in the present application, the computer program product including a computer program, and the computer program implementing the following steps when executed by a processor:
detecting, when no in-core detection device is provided at a target height position of a target fuel assembly in a reactor core, whether in-core detection devices provided at the target height position of a preset number of candidate fuel assemblies in the reactor core are damaged, the preset number of candidate fuel assemblies being adjacent to the target fuel assembly;
obtaining, when the in-core detection devices provided at the target height position of the candidate fuel assemblies are all damaged, measured linear power densities corresponding to positions other than the target height position of the target fuel assembly, the in-core detection devices provided at the other positions of the candidate fuel assemblies being not damaged; and
determining a target linear power density at the target height position of the target fuel assembly based on the measured linear power densities.

In the above method, apparatus, computer device, and medium for measuring a linear power density of a fuel assembly, when no in-core detection device is provided at a target height position of a target fuel assembly in a reactor core, whether in-core detection devices provided at the target height position of a preset number of candidate fuel assemblies in the reactor core are damaged is detected. The preset number of candidate fuel assemblies are adjacent to the target fuel assembly. When the in-core detection devices provided at the target height position of the candidate fuel assemblies are all damaged, measured linear power densities corresponding to positions other than the target height position of the target fuel assembly are obtained, and the in-core detection devices provided at the other positions of the candidate fuel assemblies are not damaged. A target linear power density at the target height position of the target fuel assembly is determined based on the measured linear power densities. In the method, the target linear power density of the target fuel assembly is determined by using the measured linear power densities corresponding to the positions other than the target height position of the target fuel assembly, thereby avoiding a problem that the linear power density of the target fuel assembly not provided with the in-core detection device cannot be accurately obtained when no in-core detection device is provided at the target height position of the target fuel assembly in the reactor core, and further improving accuracy of obtaining the linear power density of the target fuel assembly.

### BRIEF DESCRIPTION OF DRAWINGS

FIG. 1 is an application environment diagram of a method for measuring a linear power density of a fuel assembly provided in this embodiment.
FIG. 2 is a schematic flowchart of a first method for measuring a linear power density of a fuel assembly provided in this embodiment.
FIG. 3 is a schematic structural diagram of a reactor core and a fuel assembly provided in this embodiment.
FIG. 4 is a schematic flowchart of determining a target linear power density provided in this embodiment.
FIG. 5 is a schematic flowchart of a second method for measuring a linear power density of a fuel assembly provided in this embodiment.
FIG. 6 is a structural block diagram of a first kind of apparatus for measuring a linear power density of a fuel assembly provided in this embodiment.
FIG. 7 is a structural block diagram of the second kind of apparatus for measuring a linear power density of a fuel assembly provided in this embodiment.
FIG. 8 is a structural block diagram of a third kind of apparatus for measuring a linear power density of a fuel assembly provided in this embodiment.
FIG. 9 is an internal structural diagram of a computer device provided in this embodiment.

### DETAILED DESCRIPTION

To make the objectives, technical solutions, and advantages of the present application clearer, the present application is further described in detail below with reference to the accompanying drawings and embodiments. It should be understood that the specific embodiments described herein are merely used to explain the present application, and are not used to limit the present application.

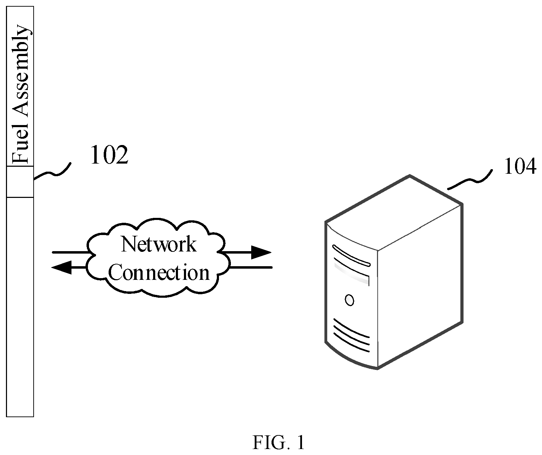

A method for measuring a linear power density of a fuel assembly provided in the embodiments of the present application can be applied to an application environment shown in FIG. 1. An in-core detection device 102 is configured to communicate with a server 104 through a network. A data storage system can store data to be processed by the server 104. The data storage system can be integrated on the server 104, or can be placed on a cloud or another network server. When no in-core detection device 102 is provided at a target height position of a target fuel assembly in a reactor core, whether in-core detection devices 102 provided at the target height position of a preset number of candidate fuel assemblies that are in the reactor core and adjacent to the target fuel assembly are damaged is detected. When the in-core detection devices 102 provided at the target height position of the candidate fuel assemblies are all damaged, measured linear power densities corresponding to positions, other than the target height position, in the target fuel assembly are obtained, and in-core detection devices 102 provided at the other positions of the candidate fuel assemblies are not damaged. A target linear power density at the target height position of the target fuel assembly is determined based on the measured linear power densities. The server 104 may be implemented by an independent server or a server cluster including a plurality of servers.

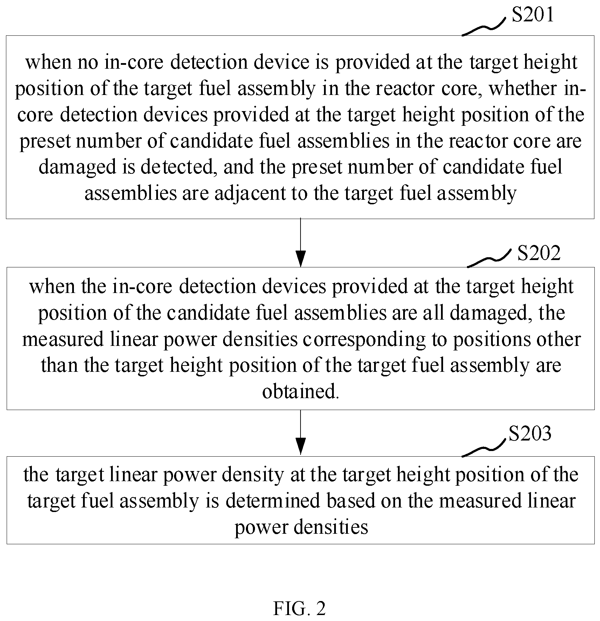

In an exemplary embodiment, as shown in FIG. 2, a method for measuring a linear power density of a fuel assembly is provided. The method is described by taking application of the method to the server 104 in FIG. 1 as an example, and includes the following steps S201 to S203.

At Step S201, when no in-core detection device is provided at the target height position of the target fuel assembly in the reactor core, whether in-core detection devices provided at the target height position of the preset number of candidate fuel assemblies in the reactor core are damaged is detected. The preset number of candidate fuel assemblies are adjacent to the target fuel assembly.

The reactor core may be a component including at least one fuel assembly in a reactor. The target height position may be a position corresponding to any axial height, in a fuel assembly, at which an in-core detection device is provided. The in-core detection device may be a device configured to detect the linear power density at each axial height in a fuel assembly, such as a self-powered neutron detector (SPND). The fuel assembly may be a component configured to detect the linear power density. The fuel assembly is generally vertically arranged in the reactor core, a plurality of axial heights are provided in the fuel assembly, and an in-core detection device may be provided at each axial height. It should be noted that, in a fuel assembly provided with in-core detection devices, an in-core detection device is provided at each axial height of the fuel assembly. When no in-core detection device is provided in a fuel assembly, it is indicated that no in-core detection device is provided at any axial height of the fuel assembly. Therefore, there is no case where a fuel assembly is provided with only some of the in-core detection devices. The target fuel assembly may be a fuel assembly whose linear power density is to be measured. The candidate fuel assembly may be a fuel assembly that is adjacent to the target fuel assembly within a preset distance and is provided with an in-core detection device. The linear power density may be the density of output power of a fuel assembly detected by an in-core detection device.

Optionally, when no in-core detection device is provided at the target height position of the target fuel assembly in the reactor core, the server can select a preset number of fuel assemblies adjacent to the target fuel assembly, determine an arrangement of in-core detection devices in each of the fuel assemblies, select, from the fuel assemblies, fuel assemblies provided with in-core detection devices as the candidate fuel assemblies, and further determine whether in-core detection devices provided at the target height position of the candidate fuel assemblies are damaged.

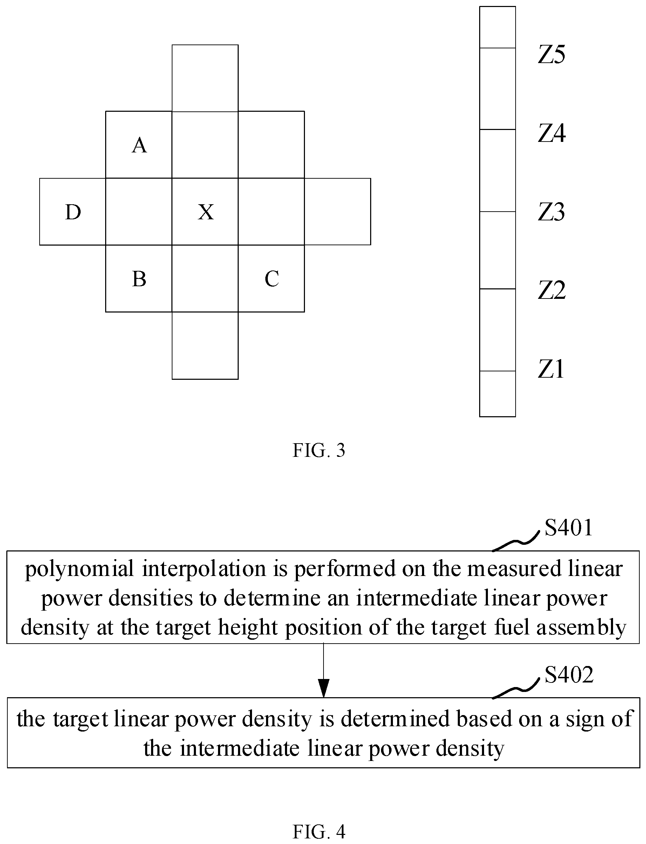

For example, FIG. 3 is a schematic structural diagram of the reactor core and fuel assemblies. The left diagram shows a structure of the reactor core, and each square in the diagram represents a fuel assembly. An in-core detection device (i.e., an SPND) is provided at each axial height in each of a fuel assembly A, a fuel assembly B, a fuel assembly C, and a fuel assembly D. The right diagram shows a structure of a fuel assembly X in the reactor core. Five axial heights, that is, axial heights Z1 to Z5, are provided in the fuel assembly X, and no in-core detection device is provided at the axial heights. Detecting a target linear power density at an axial height Z3 in the fuel assembly X is taken as an example for description. Since no in-core detection device is provided at a target height position Z3 of the target fuel assembly X in the reactor core, whether in-core detection devices provided at the target height position Z3 of a preset number of candidate fuel assemblies A, B, C, and D that are in the reactor core and adjacent to the target fuel assembly X are damaged is detected.

At Step S202, when the in-core detection devices provided at the target height position of the candidate fuel assemblies are all damaged, the measured linear power densities corresponding to positions other than the target height position of the target fuel assembly are obtained.

The in-core detection devices provided at the other positions of the candidate fuel assemblies are not damaged.

Optionally, when the in-core detection devices provided at the target height position of the candidate fuel assemblies are all damaged, the server can determine other axial heights (i.e., the other positions), other than the target height position, in the target fuel assembly, and further obtain the measured linear power densities corresponding to all the other positions.

For example, as shown in FIG. 3, detecting the target linear power density at the axial height Z3 in the fuel assembly X is taken as an example for description. When the in-core detection devices provided at the target height position Z3 of the candidate fuel assemblies are all damaged, the measured linear power densities corresponding to the positions (i.e., the axial heights Z1, Z2, Z4, and Z5), other than the target height position Z3, in the target fuel assembly X, are obtained.

At Step S203, the target linear power density at the target height position of the target fuel assembly is determined based on the measured linear power densities.

The target linear power density may be a linear power density determined by using the measured linear power densities corresponding to all the other positions in the target fuel assembly.

Optionally, the measured linear power densities corresponding to all the other positions in the target fuel assembly are obtained. Polynomial interpolation is performed on the measured linear power densities. A linear power density obtained through the polynomial interpolation is taken as the target linear power density of the target fuel assembly.

In the above method for measuring a linear power density of a fuel assembly, when no in-core detection device is provided at the target height position of the target fuel assembly in the reactor core, whether the in-core detection devices provided at the target height position of the preset number of candidate fuel assemblies in the reactor core are damaged is detected. The preset number of candidate fuel assemblies are adjacent to the target fuel assembly. When the in-core detection devices provided at the target height position of the candidate fuel assemblies are all damaged, the measured linear power densities corresponding to the positions other than the target height position of the target fuel assembly are obtained, and the in-core detection devices provided at the other positions of the candidate fuel assemblies are not damaged. The target linear power density at the target height position of the target fuel assembly is determined based on the measured linear power densities. In the method, the target linear power density of the target fuel assembly is determined by using the measured linear power densities corresponding to the positions other than the target height position of the target fuel assembly, thereby avoiding a problem that the linear power density of the target fuel assembly not provided with an in-core detection device cannot be accurately obtained when no in-core detection device is provided at the target height position of the target fuel assembly in the reactor core, and further improving accuracy of obtaining the linear power density of the target fuel assembly.

It should be noted that, when in-core detection devices are provided at all axial heights of the target fuel assembly in the reactor core, the server can directly obtain target linear power densities at the axial heights of the target fuel assembly through the in-core detection devices provided at the axial heights. For a target fuel assembly not provided with in-core detection devices at the axial heights, a case may also occur where in-core detection devices provided in some candidate fuel rods adjacent to the target fuel assembly at a certain axial height are damaged. For this case, this embodiment may further include the following. When at least one of the in-core detection devices at the target height position of the candidate fuel assemblies is not damaged, measured linear power densities at the target height position of the candidate fuel assemblies are obtained. The target linear power density is determined based on the measured linear power densities at the target height position of the candidate fuel assemblies, measurement weights corresponding to the candidate fuel assemblies, and signal states of the in-core detection devices provided at the target height position of the candidate fuel assemblies. A signal state can represent an operating state of an in-core detection device. For example, when the signal state takes a value of 1, it is indicated that the in-core detection device is operating normally, and when the signal state takes a value of 0, it is indicated that the in-core detection device stops operating. Optionally, when at least one of the in-core detection devices at the target height position of the candidate fuel assemblies is not damaged, the server obtains, through the in-core detection devices provided at the target height position of the candidate fuel assemblies, the measured linear power densities at the target height position of the candidate fuel assemblies whose in-core detection devices are not damaged, and determines the target linear power density by using the following formula (1-1) based on the measured linear power densities of the candidate fuel assemblies, the measurement weights corresponding to the candidate fuel assemblies, and the signal states of the in-core detection devices provided at the target height position of the candidate fuel assemblies. In this manner, the target linear power density at the target height position of the target fuel assembly not provided with an in-core detection device can be accurately determined. $P _ \left(a, z_i\right) = \left(\sum _{\left(k=1\right)}^{∧}m\left〚ω_\left(a_k\right)s_\left(a_k, z_i\right)P_\left(a_k, z_i\right)\right〛\right) / \left(\sum _ {\left(k=1\right)}^{∧} m \left〚\begin{matrix}ω _ \left(a_k\right) \\ s_ \left(a_k, z_i\right)\end{matrix}\right〛\right)$ (1-1) where, P_(a,z_i) is the target linear power density of a target fuel assembly a at a position z_i, P_(a_k,z_i) is the measured linear power density of a candidate fuel assembly a_k at the position z_i, ω_(a_k) is the measurement weight corresponding to the candidate fuel assembly a_k, s_(a_k,z_i) is the signal state of a detection device provided at the position zi in the candidate fuel assembly ak, and m is the preset number of candidate fuel assemblies.

For example, as shown in FIG. 3, detecting the target linear power density at the axial height Z3 of the fuel assembly X is taken as an example for description. When, among the candidate fuel assemblies (i.e., the candidate fuel assembly A, the candidate fuel assembly B, the candidate fuel assembly C, and the candidate fuel assembly D), only the in-core detection devices of the candidate fuel assembly C and the candidate fuel assembly D are not damaged at the target height position Z3, measured linear power densities detected at the target height position Z3 of the candidate fuel assembly C and the candidate fuel assembly D are obtained. The target linear power density is determined based on a measured linear power density C detected at the target height position Z3 by the candidate fuel assembly C, a measured linear power density D detected at the target height position Z3 by the candidate fuel assembly D, a measurement weight C corresponding to the candidate fuel assembly C, a measurement weight D corresponding to the candidate fuel assembly D, a signal state C of the in-core detection device provided at the target height position Z3 of the candidate fuel assembly C, and a signal state D of the in-core detection device provided at the target height position Z3 of the candidate fuel assembly D.

It should be noted that the measurement weights in this embodiment can be determined based on distances between the target fuel assembly and the candidate fuel assemblies. Optionally, the distances between the target fuel assembly and the candidate fuel assemblies are determined, and the measurement weights corresponding to the candidate fuel assemblies are determined based on preset weights corresponding to respective distance ranges to which the distances belong. Specifically, the server can determine the distances between the target fuel assembly and the candidate fuel assemblies, further determine the preset weights corresponding to the distance ranges to which the distances belong, and take the preset weights as the measurement weights corresponding to the candidate fuel assemblies.

FIG. 4 is a schematic flowchart of determining the target linear power density in an embodiment. To ensure accuracy of determining the target linear power density, this embodiment provides an optional manner of determining the target linear power density, including the following steps.

At Step S401, polynomial interpolation is performed on the measured linear power densities to determine an intermediate linear power density at the target height position of the target fuel assembly.

Optionally, based on the obtained measured linear power densities, the server performs the polynomial interpolation on the measured linear power densities by a preset interpolation function, to obtain a linear power density of the target fuel assembly, and takes the linear power density as the intermediate linear power density.

At Step S402, the target linear power density is determined based on a sign of the intermediate linear power density.

Optionally, since a fuel assembly inevitably generates power during operation, the linear power density of the fuel assembly is always non-negative. Therefore, the calculated intermediate linear power density needs to be further determined, to avoid an erroneous linear power density value, that is, when the intermediate linear power density is negative, the target linear power density is determined based on the target height position. When the intermediate linear power density is not negative, the intermediate linear power density is taken as the target linear power density. Specifically, when the intermediate linear power density is not negative, the intermediate linear power density can be directly taken as the target linear power density. When the intermediate linear power density is negative, the target linear power density is further determined based on the actual position of the target height position in the target fuel assembly.

Optionally, an optional manner of determining the target linear power density based on the target height position can be as follows. When the target height position is a head or tail height position, the measured linear power density corresponding to a position adjacent to the target height position in the target fuel assembly is taken as the target linear power density. When the target height position is a middle height position, linear interpolation is performed on the measured linear power densities corresponding to two positions adjacent to the target height position of the target fuel assembly to obtain the target linear power density.

Specifically, when the target height position is a head or tail height position in the target fuel assembly, the measured linear power density corresponding to a position adjacent to the head or tail height position in the target fuel assembly can be taken as the target linear power density. When the position of the intermediate linear power density is a middle height position, the measured linear power densities corresponding to two positions adjacent to the target height position in the target fuel assembly are obtained, and the target linear power density of the target fuel assembly is determined by performing linear interpolation or averaging on the two measured linear power densities.

For example, as shown in FIG. 3, when the target height position is the axial height Z1 (i.e., the head height position) of the target fuel assembly X, the measured linear power density corresponding to the axial height Z2 is taken as the target linear power density at the axial height Z1. When the target height position is the axial height Z5 (i.e., the tail height position) of the target fuel assembly X, the measured linear power density corresponding to the axial height Z4 is taken as the target linear power density at the axial height Z5. When the target height position is the axial height Z3 (i.e., the middle height position) in the target fuel assembly X, linear interpolation is performed on the measured linear power density corresponding to the axial height Z2 and the measured linear power density corresponding to the axial height Z4, and a result of the linear interpolation is taken as the target linear power density at the axial height Z3.

In the above method for determining the target linear power density, polynomial interpolation is performed on the measured linear power densities to determine the intermediate linear power density at the target height position of the target fuel assembly, and the target linear power density is determined based on the sign of the intermediate linear power density. In the method, the intermediate linear power density is determined by performing the polynomial interpolation on the measured linear power densities, and the intermediate linear power density is further adjusted to obtain the target linear power density, to ensure that the determined target linear power density is more accurate.

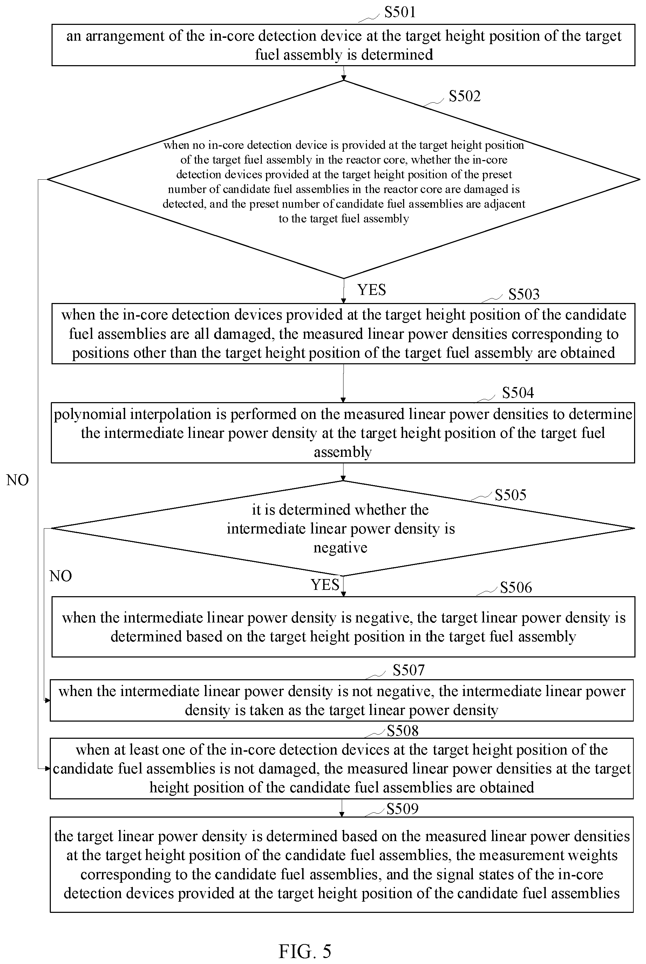

In an embodiment, an optional manner of measuring a linear power density is provided, and the method is described by taking the application of the method to the server as an example. As shown in FIG. 5, the method includes the following steps.

At Step S501, an arrangement of the in-core detection device at the target height position of the target fuel assembly is determined.

At Step S502, when no in-core detection device is provided at the target height position of the target fuel assembly in the reactor core, whether the in-core detection devices provided at the target height position of the preset number of candidate fuel assemblies in the reactor core are damaged is detected. The preset number of candidate fuel assemblies are adjacent to the target fuel assembly. When they are damaged, Step S503 is performed, and when they are not damaged, Step S508 is performed.

At Step S503, when the in-core detection devices provided at the target height position of the candidate fuel assemblies are all damaged, the measured linear power densities corresponding to positions other than the target height position of the target fuel assembly are obtained.

The in-core detection devices provided at the other positions of the candidate fuel assemblies are not damaged.

At Step S504, polynomial interpolation is performed on the measured linear power densities to determine the intermediate linear power density at the target height position of the target fuel assembly.

At Step S505, it is determined whether the intermediate linear power density is negative. When the intermediate linear power density is negative, Step S506 is performed, and when the intermediate linear power density is not negative, Step S507 is performed.

At Step S506, when the intermediate linear power density is negative, the target linear power density is determined based on the target height position in the target fuel assembly.

Optionally, when the target height position is the head or tail height position, the measured linear power density corresponding to a position adjacent to the target height position in the target fuel assembly is taken as the target linear power density. When the target height position is the middle height position, the linear interpolation is performed on the measured linear power densities corresponding to the two positions adjacent to the target height position in the target fuel assembly to obtain the target linear power density.

At Step S507, when the intermediate linear power density is not negative, the intermediate linear power density is taken as the target linear power density.

At Step S508, when at least one of the in-core detection devices at the target height position of the candidate fuel assemblies is not damaged, the measured linear power densities at the target height position of the candidate fuel assemblies are obtained.

At Step S509, the target linear power density is determined based on the measured linear power densities at the target height position of the candidate fuel assemblies, the measurement weights corresponding to the candidate fuel assemblies, and the signal states of the in-core detection devices provided at the target height position of the candidate fuel assemblies.

It should be noted that a manner of determining the measurement weight may be as follows. The distances between the target fuel assembly and the candidate fuel assemblies are determined, and the measurement weights corresponding to the candidate fuel assemblies are determined based on the preset weights corresponding to the distance ranges to which the distances belong.

For example, with reference to FIG. 3, the left diagram shows a structure of the reactor core, and each square in the diagram represents a fuel assembly. An in-core detection device (i.e., an SPND) is provided at each axial height (i.e., each height position) in each of the fuel assemblies A, the fuel assembly B, the fuel assembly C, and the fuel assembly D. The right diagram shows a structure of the fuel assembly X in the reactor core. Five axial heights, that are, the axial heights Z1 to Z5, are provided in the fuel assembly X, and no in-core detection device is provided at the axial heights. Detecting the target linear power density at the axial height Z3 in the fuel assembly X is taken as an example for description. Since no in-core detection device is provided at the target height position Z3 of the target fuel assembly X in the reactor core, it is assumed that the in-core detection devices provided at the target height position Z3 of the preset number of candidate fuel assemblies A, B, C, and D that are in the reactor core and adjacent to the target fuel assembly X are all damaged. In this case, to determine the target linear power density corresponding to the target height position Z3, the measured linear power densities at the other height positions Z1, Z2, Z4, and Z5 need to be determined first. Calculating the measured linear power density corresponding to the other height position Z1 is taken as an example for description. Linear power densities of the candidate fuel assemblies are obtained through in-core detectors mounted at the height position Z1 of the candidate fuel assembly A, the candidate fuel assembly B, the candidate fuel assembly C, and the candidate fuel assembly D. The measured linear power density at the other height position Z1 of the target fuel assembly X is determined based on the linear power densities, the measurement weights corresponding to the candidate fuel assemblies, and the signal states of the in-core detection devices provided at the target height position Z1 of the candidate fuel assemblies. The measured linear power densities at the other height positions Z2, Z4, and Z5 of the target fuel assembly X are determined based on the above manner. The target linear power density at the target height position Z3 is obtained through linear interpolation based on the measured linear power densities at the other height positions Z1, Z2, Z4, and Z5 in the target fuel assembly X.

It should be understood that, although the steps in the flowcharts involved in the embodiments described above are sequentially displayed as indicated by arrows, these steps are not necessarily performed sequentially in the order indicated by the arrows. Unless explicitly stated herein, there is no strict order limitation on the performance of these steps, and these steps can be performed in other orders. Moreover, at least some of the steps in the flowcharts involved in the embodiments described above can include a plurality of steps or a plurality of stages. These steps or stages are not necessarily performed and completed at the same moment, but can be performed at different moments. An order of performing these steps or stages is not necessarily sequential, but these steps or stages can be performed in turn or alternately with at least some of other steps or of steps or stages in other steps.

Based on the same inventive concept, an apparatus for measuring a linear power density of a fuel assembly is further provided in an embodiment of the present application, which is configured to implement the above method for measuring the linear power density of the fuel assembly. An implementation of the apparatus for solving the problem provided is similar to the implementation described in the above method. Therefore, for a specific definition of one or more embodiments of the apparatus provided below for measuring the linear power density of the fuel assembly, reference can be made to the definition of the above method for measuring the linear power density of the fuel assembly, and details are not described here again.

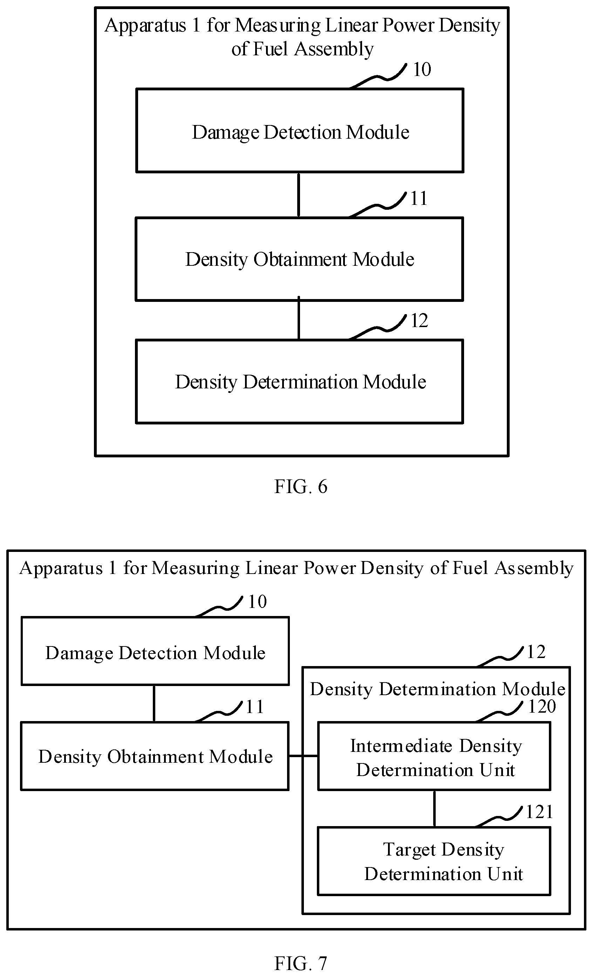

In an exemplary embodiment, as shown in FIG. 6, an apparatus 1 for measuring a linear power density of a fuel assembly is provided, including: a damage detection module 10, a density obtainment module 11, and a density determination module 12.

The damage detection module 10 is configured to detect, when no in-core detection device is provided at the target height position of the target fuel assembly in the reactor core, whether the in-core detection devices provided at the target height position of the preset number of candidate fuel assemblies in the reactor core are damaged. The preset number of candidate fuel assemblies are adjacent to the target fuel assembly. The candidate fuel assemblies are provided with the in-core detection device.

The density obtainment module 11 is configured to obtain, when the in-core detection devices provided at the target height position of the candidate fuel assemblies are all damaged, the measured linear power densities corresponding to positions other than the target height position of the target fuel assembly, and the in-core detection devices provided at the other positions of the candidate fuel assemblies are not damaged.

The density determination module 12 is configured to determine the target linear power density at the target height position of the target fuel assembly based on the measured linear power densities.

In an embodiment, as shown in FIG. 7, the density determination module 12 in FIG. 6 includes:
an intermediate density determination unit 120, configured to perform polynomial interpolation on the measured linear power densities to determine the intermediate linear power density at the target height position of the target fuel assembly; and
a target density determination unit 121, configured to determine the target linear power density based on the sign of the intermediate linear power density.

In an embodiment, the target density determination unit 121 in FIG. 7 includes:
a negative-number subunit, configured to determine, when the intermediate linear power density is negative, the target linear power density based on the target height position of the target fuel assembly; and
a non-negative-number subunit, configured to take, when the intermediate linear power density is not negative, the intermediate linear power density as the target linear power density.

In an embodiment, the negative-number subunit is further configured to: take, when the target height position is a head or tail height position, the measured linear power density corresponding to a position adjacent to the target height position of the target fuel assembly as the target linear power density; and perform, when the target height position is a middle height position, linear interpolation on the measured linear power densities corresponding to two positions adjacent to the target height position of the target fuel assembly to obtain the target linear power density.

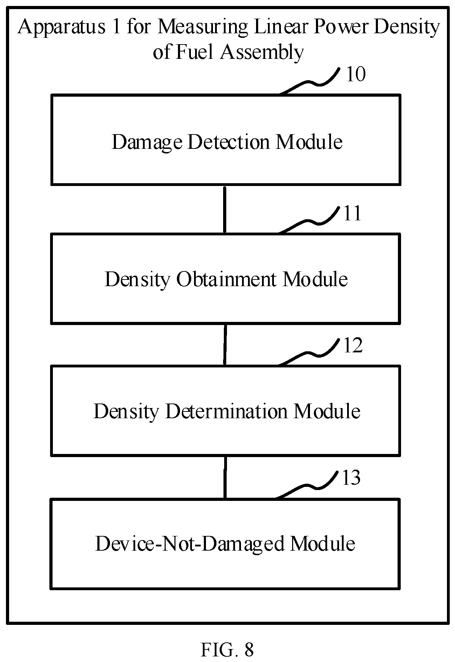

In an embodiment, as shown in FIG. 8, the apparatus 1 for measuring the linear power density of the fuel assembly in FIG. 5 includes:
a device-not-damaged module 13, configured to obtain, when at least one in-core detection device at the target height position of the candidate fuel assemblies is not damaged, the measured linear power densities at the target height position of the candidate fuel assemblies, and determine the target linear power density based on the measured linear power densities at the target height position of the candidate fuel assemblies, the measurement weights corresponding to the candidate fuel assemblies, and the signal states of the in-core detection devices provided at the target height position of the candidate fuel assemblies.

In an embodiment, the device-not-damaged module 13 in FIG. 8 further includes:
a distance determination unit 130, configured to determine the distances between the target fuel assembly and the candidate fuel assemblies; and
a weight determination unit 131, configured to determine the measurement weights corresponding to the candidate fuel assemblies based on the preset weights corresponding to the distance ranges to which the distances belong.

All or some of the modules in the above apparatus for measuring the linear power density of the fuel assembly can be implemented by software, hardware, or a combination thereof. The modules can be embedded in or independent of a processor in a computer device in hardware, or can be stored in a memory in the computer device in software, so that the processor invokes and performs operations corresponding to the modules.

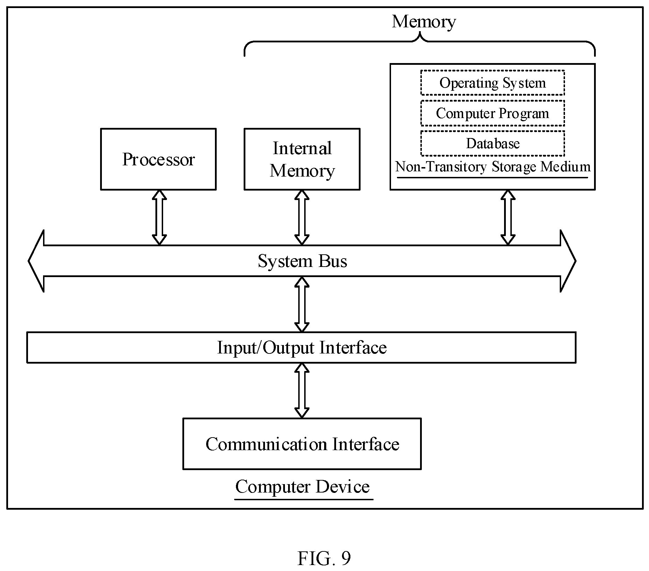

In an embodiment, a computer device is provided. The computer device may be a server, and an internal structural diagram of the computer device may be shown in FIG. 9. The computer device includes a processor, a memory, an input/output interface (Input/Output, I/O for short), and a communication interface. The processor, the memory, and the input/output interface are connected through a system bus, and the communication interface is connected to the system bus through the input/output interface. The processor of the computer device is configured to provide computing and control capabilities. The memory of the computer device includes a non-volatile storage medium and an internal memory. The non-volatile storage medium stores an operating system, a computer program, and a database. The internal memory provides an environment for running the operating system and the computer program in the non-volatile storage medium. The database of the computer device is configured to store linear power density data. The input/output interface of the computer device is configured to exchange information between the processor and an external device. The communication interface of the computer device is configured to communicate with an external terminal through a network connection. The computer program, when executed by the processor, implements the method for measuring the linear power density of the fuel assembly.

It can be understood by those skilled in the art that the structure shown in FIG. 9 is merely a block diagram of a part of the structure related to the solution of the present application, and does not constitute a limitation on the computer device to which the solution of the present application is applied. A specific computer device may include more or fewer components than those shown in the drawings, combine some components, or have a different component arrangement.

In an exemplary embodiment, a computer device is provided, including a memory and a processor, the memory storing a computer program, and the processor implementing the following steps when executing the computer program:
detecting, when no in-core detection device is provided at the target height position of the target fuel assembly in the reactor core, whether the in-core detection devices provided at the target height position of the preset number of candidate fuel assemblies in the reactor core are damaged, the preset number of candidate fuel assemblies being adjacent to the target fuel assembly, the candidate fuel assemblies being provided with the in-core detection device;
obtaining, when the in-core detection devices provided at the target height position of the candidate fuel assemblies are all damaged, the measured linear power densities corresponding to positions other than the target height position of the target fuel assembly, the in-core detection devices provided at the other positions of the candidate fuel assemblies being not damaged; and
determining the target linear power density at the target height position of the target fuel assembly based on the measured linear power densities.

In an embodiment, the processor, when executing the computer program, further implements the following steps:
performing polynomial interpolation on the measured linear power densities to determine the intermediate linear power density at the target height position of the target fuel assembly; and
determining the target linear power density based on the sign of the intermediate linear power density.

In an embodiment, the processor, when executing the computer program, further implements the following steps:
determining, when the intermediate linear power density is negative, the target linear power density based on the target height position in the target fuel assembly; and
taking, when the intermediate linear power density is not negative, the intermediate linear power density as the target linear power density.

In an embodiment, the processor, when executing the computer program, further implements the following steps:
taking, when the target height position is a head or tail height position, the measured linear power density corresponding to a position adjacent to the target height position in the target fuel assembly as the target linear power density; and
performing, when the target height position is a middle height position, linear interpolation on the measured linear power densities corresponding to two positions adjacent to the target height position of the target fuel assembly to obtain the target linear power density.

In an embodiment, the processor, when executing the computer program, further implements the following steps:
obtaining, when at least one in-core detection device at the target height position of the candidate fuel assemblies is not damaged, the measured linear power densities at the target height position of the candidate fuel assemblies; and
determining the target linear power density based on the measured linear power densities at the target height position of the candidate fuel assemblies, the measurement weights corresponding to the candidate fuel assemblies, and the signal states of the in-core detection devices provided at the target height position of the candidate fuel assemblies.

In an embodiment, the processor, when executing the computer program, further implements the following steps:
determining the distances between the target fuel assembly and the candidate fuel assemblies; and
determining the measurement weights corresponding to the candidate fuel assemblies based on the preset weights corresponding to the distance ranges to which the distances belong.

In an embodiment, a computer-readable storage medium is provided, having a computer program stored thereon, the computer program implementing the following steps when executed by a processor:
detecting, when no in-core detection device is provided at the target height position of the target fuel assembly in the reactor core, whether the in-core detection devices provided at the target height position of the preset number of candidate fuel assemblies in the reactor core are damaged, the preset number of candidate fuel assemblies being adjacent to the target fuel assembly, the candidate fuel assemblies being provided with the in-core detection device;
obtaining, when the in-core detection devices provided at the target height position of the candidate fuel assemblies are all damaged, the measured linear power densities corresponding to positions other than the target height position of the target fuel assembly, the in-core detection devices provided at the other positions of the candidate fuel assemblies being not damaged; and
determining the target linear power density at the target height position of the target fuel assembly based on the measured linear power densities.

In an embodiment, the computer program, when executed by the processor, further implements the following steps:
performing polynomial interpolation on the measured linear power densities to determine the intermediate linear power density at the target height position of the target fuel assembly; and
determining the target linear power density based on the sign of the intermediate linear power density.

In an embodiment, the computer program, when executed by the processor, further implements the following steps:
determining, when the intermediate linear power density is negative, the target linear power density based on the target height position in the target fuel assembly; and
taking, when the intermediate linear power density is not negative, the intermediate linear power density as the target linear power density.

In an embodiment, the computer program, when executed by the processor, further implements the following steps:
taking, when the target height position is a head or tail height position, the measured linear power density corresponding to a position adjacent to the target height position in the target fuel assembly as the target linear power density; and
performing, when the target height position is a middle height position, linear interpolation on the measured linear power densities corresponding to two positions adjacent to the target height position in the target fuel assembly to obtain the target linear power density.

In an embodiment, the computer program, when executed by the processor, further implements the following steps:
obtaining, when at least one in-core detection device at the target height position of the candidate fuel assemblies is not damaged, the measured linear power densities at the target height position of the candidate fuel assemblies; and
determining the target linear power density based on the measured linear power densities at the target height position of the candidate fuel assemblies, the measurement weights corresponding to the candidate fuel assemblies, and the signal states of the in-core detection devices provided at the target height position of the candidate fuel assemblies.

In an embodiment, the computer program, when executed by the processor, further implements the following steps:
determining the distances between the target fuel assembly and the candidate fuel assemblies; and
determining the measurement weights corresponding to the candidate fuel assemblies based on the preset weights corresponding to the distance ranges to which the distances belong.

In an embodiment, a computer program product is provided, including a computer program, and the computer program, when executed by a processor, implements the following steps:
detecting, when no in-core detection device is provided at the target height position of the target fuel assembly in the reactor core, whether the in-core detection devices provided at the target height position of the preset number of candidate fuel assemblies in the reactor core are damaged, the preset number of candidate fuel assemblies being adjacent to the target fuel assembly, the candidate fuel assemblies being provided with the in-core detection device;
obtaining, when the in-core detection devices provided at the target height position of the candidate fuel assemblies are all damaged, the measured linear power densities corresponding to positions other than the target height position of the target fuel assembly, the in-core detection devices provided at the other positions of the candidate fuel assemblies being not damaged; and
determining the target linear power density at the target height position of the target fuel assembly based on the measured linear power densities.

In an embodiment, the computer program, when executed by the processor, further implements the following steps:
performing polynomial interpolation on the measured linear power densities to determine the intermediate linear power density at the target height position of the target fuel assembly; and
determining the target linear power density based on the sign of the intermediate linear power density.

In an embodiment, the computer program, when executed by the processor, further implements the following steps:
determining, when the intermediate linear power density is negative, the target linear power density based on the target height position in the target fuel assembly; and
taking, when the intermediate linear power density is not negative, the intermediate linear power density as the target linear power density.

In an embodiment, the computer program, when executed by the processor, further implements the following steps:
taking, when the target height position is a head or tail height position, the measured linear power density corresponding to a position adjacent to the target height position in the target fuel assembly as the target linear power density; and
performing, when the target height position is a middle height position, linear interpolation on the measured linear power densities corresponding to two positions adjacent to the target height position in the target fuel assembly to obtain the target linear power density.

In an embodiment, the computer program, when executed by the processor, further implements the following steps:
obtaining, when at least one in-core detection device at the target height position of the candidate fuel assemblies is not damaged, the measured linear power densities at the target height position of the candidate fuel assemblies; and
determining the target linear power density based on the measured linear power densities at the target height position of the candidate fuel assemblies, the measurement weights corresponding to the candidate fuel assemblies, and the signal states of the in-core detection devices provided at the target height position of the candidate fuel assemblies.

In an embodiment, the computer program, when executed by the processor, further implements the following steps:
determining the distances between the target fuel assembly and the candidate fuel assemblies; and
determining the measurement weights corresponding to the candidate fuel assemblies based on the preset weights corresponding to the distance ranges to which the distances belong.

It should be noted that the data involved in the present application (including but not limited to data for analysis, stored data, displayed data, etc.) are all information and data authorized by a user or fully authorized by all parties, and the collection, use, and processing of the relevant data need to comply with relevant regulations.

Those of ordinary skill in the art can understand that all or some of the procedures in the method of the above embodiments can be implemented by a computer program instructing relevant hardware. The computer program may be stored in a non-transitory computer-readable storage medium, and when executed, the computer program can include the procedures of the embodiments of the above method. Any reference to a memory, a database, or another medium used in the embodiments provided in the present application may include at least one of a non-volatile memory or a volatile memory. The non-volatile memory may include a read-only memory (Read-Only Memory, ROM), a magnetic tape, a floppy disk, a flash memory, an optical memory, a high-density embedded non-volatile memory, a resistive random access memory (ReRAM), a magnetoresistive random access memory (Magnetoresistive Random Access Memory, MRAM), a ferroelectric random access memory (Ferroelectric Random Access Memory, FRAM), a phase change memory (Phase Change Memory, PCM), a graphene memory, etc. The volatile memory may include a random access memory (Random Access Memory, RAM), an external cache memory, etc. As an illustration rather than a limitation, the RAM may be in a plurality of forms, such as a static random access memory (Static Random Access Memory, SRAM), a dynamic random access memory (Dynamic Random Access Memory, DRAM), etc. The database involved in the embodiments provided in the present application may include at least one of a relational database and a non-relational database. The non-relational database may include a blockchain-based distributed database, etc., without being limited thereto. The processor involved in the embodiments provided in the present application may be a general-purpose processor, a central processing unit, a graphics processing unit, a digital signal processor, a programmable logic device, a quantum-computing-based data processing logic device, etc., without being limited thereto.

The technical features of the above embodiments can be combined arbitrarily. To make the description concise, not all possible combinations of the technical features in the above embodiments are described. However, as long as there is no contradiction in the combinations of these technical features, the combinations should be considered to fall within the scope described in this specification.

The above embodiments merely express several implementations of the present application, and the descriptions thereof are relatively specific and detailed, but should not be construed as a limitation on the patent scope of the present application. It should be noted that, for those of ordinary skill in the art, several variations and improvements can be made without departing from the concept of the present application, and these all fall within the protection scope of the present application. Therefore, the protection scope of the present application should be subject to the appended claims.

## Claims

1. A method for measuring a linear power density of a fuel assembly, **characterized by** comprising:
detecting, when no in-core detection device is provided at a target height position of a target fuel assembly in a reactor core, whether in-core detection devices provided at the target height position of a preset number of candidate fuel assemblies in the reactor core are damaged, wherein the preset number of candidate fuel assemblies are adjacent to the target fuel assembly, and each of the candidate fuel assemblies is provided with the in-core detection device;
obtaining, when the in-core detection devices provided at the target height position of the candidate fuel assemblies are all damaged, measured linear power densities corresponding to positions other than the target height position of the target fuel assembly, wherein the in-core detection devices provided at the other positions of the candidate fuel assemblies are not damaged; and
determining a target linear power density at the target height position of the target fuel assembly based on the measured linear power densities.

2. The method according to claim 1, wherein determining the target linear power density at the target height position of the target fuel assembly based on the measured linear power densities comprises:
performing polynomial interpolation on the measured linear power densities to determine an intermediate linear power density at the target height position of the target fuel assembly; and
determining the target linear power density based on a sign of the intermediate linear power density.

3. The method according to claim 2, wherein determining the target linear power density based on the sign of the intermediate linear power density comprises:
determining the target linear power density based on the target height position of the target fuel assembly when the intermediate linear power density is negative; and
taking the intermediate linear power density as the target linear power density when the intermediate linear power density is not negative.

4. The method according to claim 3, wherein determining the target linear power density based on the target height position of the target fuel assembly comprises:
taking, when the target height position is a head height position or a tail height position, the measured linear power density corresponding to a height position adjacent to the target height position of the target fuel assembly as the target linear power density; and
performing, when the target height position is a middle height position, linear interpolation on the measured linear power densities corresponding to two height positions adjacent to the target height position of the target fuel assembly to obtain the target linear power density.

5. The method according to claim 1, further comprising:
obtaining, when at least one of the in-core detection devices at the target height position of the candidate fuel assemblies is not damaged, measured linear power densities at the target height position of the candidate fuel assemblies; and
determining the target linear power density based on the measured linear power densities at the target height position of the candidate fuel assemblies, measurement weights corresponding to the candidate fuel assemblies, and signal states of the in-core detection devices provided at the target height position of the candidate fuel assemblies.

6. The method according to claim 5, further comprising:
determining distances between the target fuel assembly and the candidate fuel assemblies, respectively; and
determining the measurement weights corresponding to the candidate fuel assemblies, respectively, based on preset weights corresponding to respective distance ranges to which the distances belong.

7. An apparatus for measuring a linear power density of a fuel assembly, **characterized by** comprising:
a damage detection module, configured to detect, when no in-core detection device is provided at a target height position of a target fuel assembly in a reactor core, whether in-core detection devices provided at the target height position of a preset number of candidate fuel assemblies in the reactor core are damaged, wherein the preset number of candidate fuel assemblies are adjacent to the target fuel assembly;
a density obtainment module, configured to obtain, when the in-core detection devices provided at the target height position of the candidate fuel assemblies are all damaged, measured linear power densities corresponding to positions other than the target height position of the target fuel assembly, wherein the in-core detection devices provided at the other positions of the candidate fuel assemblies are not damaged; and
a density determination module, configured to determine a target linear power density at the target height position of the target fuel assembly based on the measured linear power densities.

8. A computer device, comprising a memory and a processor, the memory storing a computer program, wherein the processor, when executing the computer program, implements the steps of the method according to any one of claims 1 to 6.

9. A computer-readable storage medium, having a computer program stored thereon, wherein the computer program, when executed by a processor, implements the steps of the method according to any one of claims 1 to 6.

10. A computer program product, comprising a computer program, wherein the computer program, when executed by a processor, implements the steps of the method according to any one of claims 1 to 6.
